# EUROPÄISCHE PATENTSCHRIFT

(11) **EP 2 949 572 B1**
(45) Veröffentlichungstag und Bekanntmachung des Hinweises auf die Patenterteilung: **03.10.2018**
(21) Anmeldenummer: 14170666.3
(22) Anmeldetag: 30.05.2014
(51) Int. Cl.: B63H 21/20

(54) **Antriebssystem eines Schiffes und dessen Betrieb**
Drive system of a ship and operation of the same
Système de propulsion pour un bateau et son fonctionnement

(43) Veröffentlichungstag der Anmeldung: 02.12.2015
(73) Patentinhaber: Siemens Aktiengesellschaft, 80333 München (DE)
(72) Erfinder: Kriews, Thorben, 22081 Hamburg (DE)

(56) Entgegenhaltungen:
- EP-A2- 1 894 835
- DE-A1-102010 009 951
- US-A1- 2009 156 068
- US-A1- 2010 105 259
- US-B1- 8 725 329

## Beschreibung

Die Erfindung betrifft ein Antriebssystem eines Schiffes mit zwei Antriebssträngen und ein Verfahren zum Betrieb eines derartigen Antriebssystems.

Der Transport von Gütern über die Weltmeere ist außer von konjunkturellen Aspekten wesentlich von den Transportkosten geprägt. Um die Transportkosten zu senken, werden beispielsweise immer größere Schiffe eingesetzt, die längere Liegezeiten gegenüber den kleineren Schiffen ausgleichen müssen und mit so genannten "Green Solution Technologien" zur Erhöhung des Wirkungsgrades ausgerüstet sind. Im Fall eines Konjunktureinbruchs ist der Spielraum, diese Schiffe effizient umzurüsten, sehr gering. Um die Transportkosten zu senken, findet außerdem das so genannte "Slow-Steaming", d.h. gezieltes Fahren mit reduzierter Geschwindigkeit mit dem Zweck einer Kraftstoffeinsparung, immer größere Verbreitung. Beispielsweise wird auf Routen von Europa nach Asien, wenn keine oder nur wenige teure Güter geladen sind, die Geschwindigkeit von Containerschiffen gedrosselt. Wenn die Schiffe allerdings nicht für diese Betriebspunkte ausgelegt sind, steigt dabei ihr spezifischer Kraftstoffverbrauch an, da die Antriebsmaschinen nicht in ihrem optimalen Arbeitsbereich betrieben werden. Bei einem Schiff mit zwei Antriebssträngen verschwenden so die beiden Hauptantriebsmaschinen einen Teil ihrer Vorteile ungenutzt. Diese Verschwendung kann aufgrund der reduzierten Performance auch nicht oder nur unzureichend als elektrische Energie ins Bordnetz zurück gespeist werden.

DE 10 2010 009 951 A1 offenbart ein Verfahren zum Antrieb eines Fahrzeugs, insbesondere eines Wasserfahrzeugs, mit zwei Hauptantriebssträngen, die jeweils eine Verbrennungskraftmaschine, eine Vortriebsvorrichtung, insbesondere einen Propeller, und eine elektrische Maschine aufweisen. Dabei werden in einer bestimmten Betriebsart die beiden elektrischen Maschinen elektrisch miteinander gekoppelt, so dass eine elektrische Maschine als Generator und die andere elektrische Maschine als Elektromotor fungiert. Dadurch wird es ermöglicht, beide Vortriebsvorrichtungen mit nur einer Verbrennungskraftmaschine anzutreiben.

Der Erfindung liegt die Aufgabe zugrunde, ein verbessertes Verfahren zum Betrieb eines Antriebssystems eines Schiffes mit zwei Antriebssträngen anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Ein erfindungsgemäßes Antriebssystem eines Schiffes umfasst zwei Antriebsstränge. Dabei umfasst jeder Antriebsstrang eine Propellerwelle, einen als Verbrennungskraftmaschine ausgebildeten Hauptantrieb zum Antrieb der Propellerwelle und einen als rotierende elektrische Maschine ausgebildeten Nebenantrieb, der wahlweise als Antrieb der Propellerwelle oder generatorisch durch die Propellerwelle angetrieben betreibbar ist. Die Nebenantriebe sind derart ausgelegt und verschaltet, dass beide Propellerwellen nur mittels von genau einem Hauptantrieb geleisteter Arbeit antreibbar sind, indem ein erster Nebenantrieb generatorisch zur Erzeugung elektrischer Energie aus Drehungen einer von dem Hauptantrieb direkt angetriebenen ersten Propellerwelle betrieben wird und der zweite Nebenantrieb als von dem ersten Nebenantrieb angetriebener Antrieb der zweiten Propellerwelle betrieben wird.

Das erfindungsgemäße Verfahren betrifft ein Antriebssystem eines Schiffes mit zwei Antriebssträngen ermöglicht es also, beide Propellerwellen mittels von nur einem Hauptantrieb erbrachter Leistung anzutreiben, indem eine erste Propellerwelle direkt von dem Hauptantrieb angetrieben wird und die zweite Propellerwelle mittels elektrischer Energie angetrieben wird, die mittels der Nebenantriebe aus Drehungen der ersten Propellerwelle generiert und zum Antrieb der zweiten Propellerwelle verwendet wird. Dadurch können beide Propellerwellen bei kleineren Geschwindigkeiten durch nur einen Hauptantrieb angetrieben werden, wodurch bei entsprechender Auslegung des Antriebssystems der Wirkungsgrad des Antriebssystems bei kleinen Geschwindigkeiten gegenüber einem Betrieb mit beiden Hauptantrieben verbessert und der spezifische Kraftstoffverbrauch gesenkt werden kann. Außerdem verringert dies auch den Wartungsbedarf und die Wartungskosten für die Wartung des Antriebssystems, da der Verschleiß eines Hauptantriebs bei dessen Betrieb in günstigen Betriebspunkten gegenüber dem Betrieb in ungünstigen Betriebspunkten reduziert wird und ein Hauptantrieb zumindest zeitweise gar nicht beansprucht wird. Schließlich erhöht sich durch die Antreibbarkeit des Schiffes mit nur einem der beiden Hauptantriebe auch die Redundanz des Antriebssystems und damit die Betriebssicherheit des Schiffes.

Eine Ausgestaltung der Erfindung sieht wenigstens eine Energiegewinnungsvorrichtung zur Gewinnung von elektrischer Energie aus Abgasen eines Hauptantriebs vor.

Die Gewinnung von elektrischer Energie aus Abgasen eines Hauptantriebs ist bei einem erfindungsgemäßen Antriebssystems besonders vorteilhaft, da der Antrieb des Schiffes mit nur einem Hauptantrieb bei kleinen Geschwindigkeiten nicht nur den Wirkungsgrad des Antriebssystems verbessert, sondern auch die bei kleinen Geschwindigkeiten aus Abgasen gewinnbare Energie aufgrund der höheren Drehzahl des zum Antrieb des Schiffes verwendeten Hauptantriebs erhöht.

Vorzugsweise ist dabei von der wenigstens einen Energiegewinnungsvorrichtung aus Abgasen gewonnene Energie in ein Bordnetz des Schiffes einspeisbar.

Dadurch kann aus Abgasen gewonnene Energie vorteilhaft zur Versorgung des Bordnetzes genutzt werden.

Die Erfindung sieht ferner vor, dass jeder Antriebsstrang einen dem Nebenantrieb zugeordneten Umrichter aufweist, mittels dessen eine Frequenz einer dem Nebenantrieb zugeführten und von dem Nebenantrieb erzeugten Wechselspannung veränderbar ist, und dass jeder Nebenantrieb über die Umrichter als ein den anderen Nebenantrieb antreibender Generator betreibbar ist.

Dies ermöglicht die Kopplung der Nebenantriebe über Umrichter, um Rotationsenergie einer Propellerwelle zum elektrischen Antrieb der jeweils anderen Propellerwelle zu verwenden.

Wenn das Antriebssystem zusätzlich zu den Umrichtern wenigstens eine Energiegewinnungsvorrichtung zur Gewinnung von elektrischer Energie aus Abgasen eines Hauptantriebs aufweist, ist von der wenigstens einen Energiegewinnungsvorrichtung aus Abgasen gewonnene Energie vorzugsweise wenigstens einem Umrichter zum Antrieb des dem Umrichter zugeordneten Nebenantriebs zuführbar.

Dadurch wird aus Abgasen gewonnene Energie vorteilhaft auch zum Antrieb der Propellerwellen nutzbar.

Eine weitere Ausgestaltung eines Antriebssystems mit den Nebenantrieben zugeordneten Umrichtern sieht vor, dass jedem Nebenantrieb über den ihm zugeordneten Umrichter elektrische Energie aus einem Bordnetz des Schiffes zuführbar ist.

Dies ermöglicht, Energie aus dem Bordnetz zum Antrieb des Schiffes zu verwenden und erweitert damit die Möglichkeiten, die Antriebsleistungen abgestuft auf verschiedene Komponenten zu verteilen und den Wirkungsgrad weiter zu optimieren. Insbesondere kann Energie aus dem Bordnetz vorteilhaft zur Erbringung von Antriebsleistungen eingesetzt werden, die nur um relativ geringe Zusatzleistungen größer als eine von einem Hauptantrieb allein erbringbare Leistung sind, da die Zusatzleistungen dann dem Bordnetz entnommen werden können, ohne den zweiten Hauptantrieb einsetzen zu müssen, was den Wirkungsgrad des Antriebssystems herabsetzen und den spezifischen Kraftstoffverbrauch gegenüber der Verwendung nur eines Hauptantriebs erhöhen würde.

Ferner ist vorzugsweise wenigstens ein Hauptantrieb auf eine Auslegungsleistung für den Antrieb beider Propellerwellen ausgelegt, so dass die Auslegungsleistung allein von dem Hauptantrieb und aus seinen Abgasen gewonnener elektrischer Energie bei einem wenigstens annähernd minimalen spezifischen Kraftstoffverbrauch des Hauptantriebs erbracht wird.

Dadurch werden der Wirkungsgrad des Antriebssystems und der spezifische Kraftstoffverbrauch bei kleinen Geschwindigkeiten weiter optimiert, insbesondere wenn die Auslegungsleistung auf eine bei Langsamfahrten bevorzugte Geschwindigkeit des Schiffes ausgerichtet wird.

Eine weitere Ausgestaltung der Erfindung sieht vor, dass die beiden Hauptantriebe für unterschiedliche Maximalleistungen ausgelegt sind.

Dadurch kann das Antriebssystem auf verschiedene kleine Geschwindigkeiten optimiert, bei denen jeweils nur einer der Hauptantriebe eingesetzt wird. Ferner können durch geeignete Auslegung der Hauptantriebe Gewicht, Bauraum und Investitionskosten des Antriebssystems eingespart werden.

Eine weitere Ausgestaltung der Erfindung sieht eine die beiden Nebenantriebe koppelnde elektrische Welle.

Diese Ausgestaltung ermöglicht vorteilhaft eine elektrische Kopplung der beiden Propellerwellen über eine die beiden Nebenantriebe koppelnde elektrische Welle. Gegenüber der vorgenannten Kopplung der Nebenantriebe über Umrichter werden dadurch vorteilhaft Verluste bei der Energieübertragung zwischen den Nebenantrieben reduziert.

Bei dem erfindungsgemäßen Verfahren zum Betrieb eines erfindungsgemäßen Antriebssystems wird eine Antriebsleistung zum Antrieb beider Propellerwellen in einem ersten Leistungsintervall nur von genau einem Hauptantrieb erbracht. Dabei wird eine erste Propellerwelle direkt von dem Hauptantrieb angetrieben und die zweite Propellerwelle wird mittels elektrischer Energie angetrieben, die mittels eines ersten generatorisch betriebenen Nebenantriebs aus Drehungen der ersten Propellerwelle gewonnen und zum Antrieb der zweiten Propellerwelle mittels des zweiten Nebenantriebs verwendet wird.

Dies hat die oben bereits genannten Vorteile der Erhöhung des Wirkungsgrades und der Reduzierung des spezifischen Kraftstoffverbrauchs bei kleinen Geschwindigkeiten, die dem ersten Leistungsintervall entsprechen.

Vorzugsweise wird das erste Leistungsintervall derart definiert, dass es eine Antriebsleistung enthält, bei der derjenige Hauptantrieb, der die Antriebsleistung erbringt, einen minimalen spezifischen Kraftstoffverbrauch hat.

Dadurch wird der spezifische Kraftstoffverbrauch in dem ersten Leistungsintervall vorteilhaft optimiert.

Das erfindungsgemäße Verfahren sieht ferner vor, dass eine Antriebsleistung zum Antrieb beider Propellerwellen in einem zweiten Leistungsintervall nur von genau einem Hauptantrieb und dem Bordnetz entnommener Leistung erbracht wird. Dabei wird eine erste Propellerwelle direkt von dem Hauptantrieb angetrieben und die zweite Propellerwelle wird mittels elektrischer Energie angetrieben, die zu einem Teil dem Bordnetz entnommen und zu einem zweiten Teil mittels eines ersten als Generator betriebenen Nebenantriebs aus Drehungen der ersten Propellerwelle gewonnen wird, und die dem zweiten Nebenantrieb über den ihm zugeordneten Umrichter zugeführt und zum Antrieb der zweiten Propellerwelle mittels des als Motor betriebenen zweiten Nebenantriebs verwendet wird.

Dies hat den oben bereits genannten Vorteil, dass Antriebsleistungen des zweiten Leistungsintervalls, die nur um relativ geringe Zusatzleistungen größer als eine von einem Hauptantrieb allein erbringbare Leistung sind, dem Bordnetz entnommen werden, ohne den zweiten Hauptantrieb einzusetzen und dadurch den Wirkungsgrad des Antriebssystems herabzusetzen und den spezifischen Kraftstoffverbrauch gegenüber der Verwendung nur eines Hauptantriebs zu erhöhen.

Eine weitere Ausgestaltung des erfindungsgemäßen Verfahrens für Antriebssysteme mit den Nebenantrieben zugeordneten Umrichtern und mit wenigstens einer Energiegewinnungsvorrichtung zur Gewinnung von elektrischer Energie aus Abgasen eines Hauptantriebs sieht vor, dass eine Antriebsleistung zum Antrieb beider Propellerwellen, die mit einer oben genannten Auslegungsleistung eines Hauptantriebs übereinstimmt, nur von genau einem auf diese Auslegungsleistung ausgelegten Hauptantrieb und aus den Abgasen dieses Hauptantriebs gewonnener elektrischer Energie erbracht wird. Dabei wird eine erste Propellerwelle direkt von dem Hauptantrieb angetrieben und die zweite Propellerwelle wird mittels elektrischer Energie angetrieben, die zu einem Teil aus den Abgasen des Hauptantriebs und zu einem zweiten Teil mittels eines ersten als Generator betriebenen Nebenantriebs aus Drehungen der ersten Propellerwelle gewonnen wird, und die dem zweiten Nebenantrieb über den ihm zugeordneten Umrichter zugeführt und zum Antrieb der zweiten Propellerwelle mittels des als Motor betriebenen zweiten Nebenantriebs verwendet wird.

Dadurch kann das Schiff effektiv und effizient in einem der Auslegungsleistung eines Hautpantriebs entsprechenden Betriebspunkt betrieben werden, in dem ein Hauptantrieb gut ausgelastet und damit dessen spezifischer Kraftstoffverbrauch niedrig ist, der zweite Hauptantrieb nicht in Betrieb ist, eine ausreichende Geschwindigkeit realisiert werden kann und die aus den Abgasen gewonnene Abgasleistung voll zum Antrieb des Schiffes genutzt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Blockdiagramm eines an ein Bordnetz gekoppelten Antriebssystems eines Schiffes gemäß einem ersten Ausführungsbeispiel,
- FIG 2: ein Kennliniendiagramm für Leistungen von Komponenten eines Antriebssystems eines Schiffes, und
- FIG 3: ein Blockdiagramm eines an ein Bordnetz gekoppelten Antriebssystems eines Schiffes gemäß einem zweiten Ausführungsbeispiel.

Einander entsprechende Teile sind in den Figuren mit den gleichen Bezugszeichen versehen.

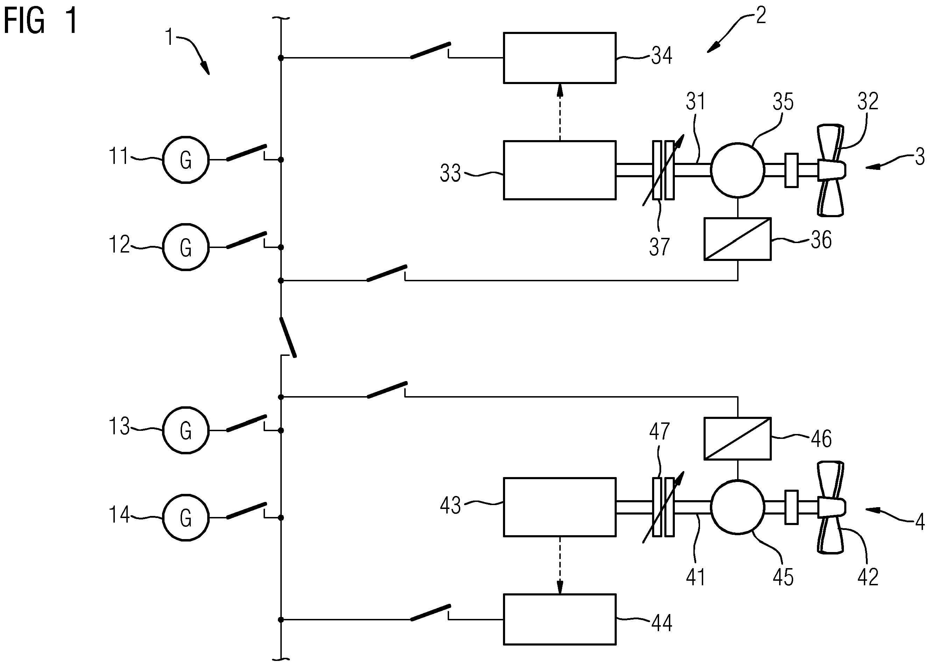

Figur 1 zeigt ein Blockdiagramm eines an ein Bordnetz 1 gekoppelten Antriebssystems 2 eines Schiffes gemäß einem ersten Ausführungsbeispiel.

Das Bordnetz 1 weist mehrere Bordnetzgeneratoren 11 bis 14 zur Erzeugung elektrischer Energie für das Bordnetz 1 auf. Die Bordnetzgeneratoren 11 bis 14 werden beispielsweise jeweils durch eine (nicht dargestellte) Verbrennungskraftmaschine, z. B. einen Dieselmotor angetrieben.

Das Antriebssystem 2 weist zwei Antriebsstränge 3, 4 auf. Jeder Antriebsstrang 3, 4 umfasst
- eine Propellerwelle 31, 41 für einen Propeller 32, 42 des Schiffes,
- einen als Verbrennungskraftmaschine, beispielsweise als Zweitakt-Dieselmotor, ausgebildeten Hauptantrieb 33, 43 zum Antrieb der jeweiligen Propellerwelle 31, 41,
- eine Energiegewinnungsvorrichtung 34, 44 zur Gewinnung von elektrischer Energie aus Abgasen des jeweiligen Hauptantriebs 33, 43,
- einen als rotierende elektrische Maschine ausgebildeten Nebenantrieb 35, 45, der wahlweise als die jeweilige Propellerwelle 31, 41 antreibender Motor oder als durch die Propellerwelle 31, 41 angetriebener Generator betreibbar ist,
- einen dem jeweiligen Nebenantrieb 35, 45 zugeordneten Umrichter 36, 46, mittels dessen eine Frequenz einer dem Nebenantrieb 35, 45 zugeführten und von dem Nebenantrieb 35, 45 erzeugten Wechselspannung veränderbar ist,
- und eine Kupplung 37, 47, mittels derer der jeweilige Hauptantrieb 33, 43 von der jeweiligen Propellerwelle 31, 41 abkoppelbar ist.

Die Nebenantriebe 35, 45 und Umrichter 36, 46 sind derart ausgelegt und verschaltet, dass beide Propellerwellen 31, 41 nur mittels von einem ersten Hauptantrieb 33 geleisteter Arbeit antreibbar sind, indem ein erster Nebenantrieb 35 als Generator zur Erzeugung elektrischer Energie aus Drehungen einer von dem ersten Hauptantrieb 33 direkt angetriebenen ersten Propellerwelle 31 betrieben wird und der zweite Nebenantrieb 45 als von dem ersten Nebenantrieb 35 angetriebener Motor zum Antrieb der zweiten Propellerwelle 41 betrieben wird.

Die von einer Energiegewinnungsvorrichtung 34, 44 aus Abgasen gewonnene Energie ist ganz oder anteilig jeweils in das Bordnetz 1 einspeisbar oder einem Umrichter 36, 46 zum Antrieb des dem Umrichter 36, 46 zugeordneten Nebenantriebs 35, 45 zuführbar.

Jedem Nebenantrieb 35, 45 ist über den ihm zugeordneten Umrichter 36, 46 elektrische Energie aus dem Bordnetz 1 zuführbar und die von jedem Nebenantrieb 35, 45 in dessen Betrieb als Generator erzeugte Energie ist in das Bordnetz 1 einspeisbar.

Das in Figur 1 dargestellte Ausführungsbeispiel kann derart abgewandelt werden, dass die Umrichter 36, 46 nicht oder nicht nur mit dem Bordnetz 1 verbindbar sind, sondern alternativ oder zusätzlich direkt miteinander verbindbar sind.

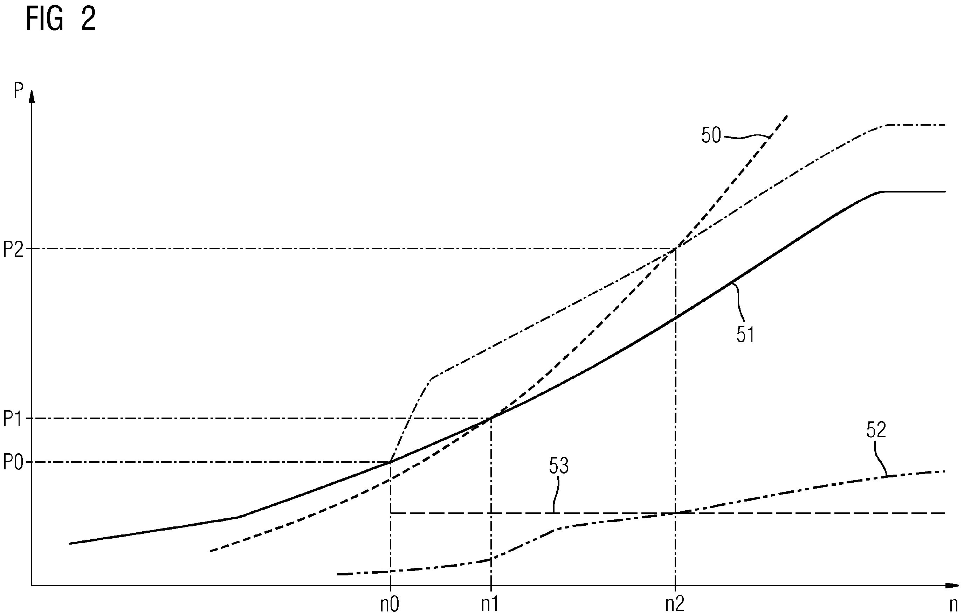

Figur 2 zeigt ein Kennliniendiagramm für Leistungen P von Komponenten des in Figur 1 dargestellten Antriebssystems 2 in Abhängigkeit von einer Drehzahl n der Propellerwellen 31, 41, wobei beide Propellerwellen 31, 41 mit derselben Drehzahl n angetrieben werden. Dargestellt sind eine zum Antrieb beider Propellerwellen 31, 41 erforderliche Antriebsleistung 50, eine von einem ersten Hauptantrieb 33 eines ersten Antriebsstrangs 3 bei dessen Betrieb mit der jeweiligen Drehzahl n erbrachte Hauptantriebsleistung 51 und eine aus Abgasen des ersten Hauptantriebs 33 gewonnene Abgasleistung 52 in Abhängigkeit von der Drehzahl n. Ferner sind eine (von der Drehzahl n unabhängige) maximale elektrische Motorleistung 53 des dem zweiten Antriebsstrang 4 angehörenden zweiten Nebenantriebs 45 und eine Gesamtleistung 54 des ersten Hauptantriebs 33 und des zweiten Nebenantriebs 45 dargestellt.

Die Hauptantriebsleistung 51 des ersten Hauptantriebs 33 reicht aus, um bis zu einem ersten Leistungswert P1 beide Propellerwellen 31, 41 anzutreiben. Daher werden beide Propellerwellen 31, 41 in einem ersten Leistungsintervall, dessen obere Grenze durch einen nullten Leistungswert P0, der den ersten Leistungswert P1 nicht überschreitet, nur durch die Hauptantriebsleistung 51 des ersten Hauptantriebs 33 angetrieben, wobei der zweite Hauptantrieb 43 abgeschaltet ist. Dazu wird die erste Propellerwelle 31 direkt von dem ersten Hauptantrieb 33 angetrieben. Die zweite Propellerwelle 41 wird mittels elektrischer Energie angetrieben, die mittels des als Generator betriebenen ersten Nebenantriebs 35 aus Drehungen der ersten Propellerwelle 31 gewonnen, über die beiden Umrichter 36, 46 dem zweiten Nebenantrieb 45 zugeführt und zum Antrieb der zweiten Propellerwelle 41 mittels des als Motor betriebenen zweiten Nebenantriebs 45 verwendet wird. Die aus Abgasen des ersten Hauptantriebs 33 gewonnene Abgasleistung 52 wird in das Bordnetz 1 eingespeist.

Bei üblichen Containerschiffen können beispielsweise der erste Leistungswert P1 etwa 12 MW, ein dem ersten Leistungswert P1 entsprechender erster Drehzahlwert n1 etwa 45 min-1, eine dem ersten Leistungswert P1 entsprechende Geschwindigkeit des Schiffes etwa 13 Knoten, der nullte Leistungswert P0 etwa 9 MW, ein dem nullten Leistungswert P0 entsprechender nullter Drehzahlwert n0 etwa 38 min-1 und eine dem nullten Leistungswert P0 entsprechende Geschwindigkeit des Schiffes etwa 12 Knoten betragen.

Oberhalb des ersten Leistungswertes P1 reicht die Hauptantriebsleistung 51 des ersten Hauptantriebs 33 nicht aus, um beide Propellerwellen 31, 41 anzutreiben. Um kleine zusätzliche Geschwindigkeiten des Schiffes, z.B. eine Steigerung der Geschwindigkeit von 12 auf 14 Knoten, zu realisieren, ist es unwirtschaftlich, den zweiten Hauptantrieb 43 einzusetzen, um den relativ geringen zusätzlichen Leistungsbedarf (z.B. 2,5 bis 5 MW) zur Verfügung zu stellen. Außerdem würde der Einsatz des zweiten Hauptantriebs 43 die Last auf dem ersten Hauptantrieb 33 und damit auch die Abgasen gewonnene Energie reduzieren. Daher wird in einem zweiten Leistungsintervall zwischen dem nullten LeistungswertPO und einem zweiten Leistungswert P2 diese kleine zusätzliche Leistung dem Bordnetz 1 entnommen, d. h. von Bordnetzgeneratoren 11 bis 14 erbracht.

In dem zweiten Leistungsintervall wird die erste Propellerwelle 31 daher ebenfalls direkt von dem ersten Hauptantrieb 33 angetrieben. Die zweite Propellerwelle 41 wird nun mittels elektrischer Energie angetrieben, die zu einem Teil dem Bordnetz 1 entnommen und zu einem zweiten Teil mittels des als Generator betriebenen ersten Nebenantriebs 35 aus Drehungen der ersten Propellerwelle 31 gewonnen wird, und die dem zweiten Nebenantrieb 45 über den ihm zugeordneten Umrichter 46 zugeführt und zum Antrieb der zweiten Propellerwelle 41 mittels des als Motor betriebenen zweiten Nebenantriebs 45 verwendet wird.

Der zweite Leistungswert P2 wird derart gewählt, dass bei diesem zweiten Leistungswert P2 beide Propellerwellen 31, 41 mittels der Hauptantriebsleistung 51 des ersten Hauptantriebs 33 und der aus Abgasen des ersten Hauptantriebs 33 gewonnenen Abgasleistung 52 angetrieben werden können. Der erste Hauptantrieb 33 ist derart ausgelegt, dass er bei dem Betrieb mit einem dem zweiten Leistungswert P2 entsprechenden zweiten Drehzahlwert n2 einen wenigstens annähernd minimalen spezifischen Kraftstoffverbrauch hat.

Bei dem zweiten Leistungswert P2 wird die erste Propellerwelle 31 direkt von dem ersten Hauptantrieb 33 angetrieben und die zweite Propellerwelle 41 wird mittels elektrischer Energie angetrieben, die zu einem Teil aus den Abgasen des ersten Hauptantriebs 33 und zu einem zweiten Teil mittels des als Generator betriebenen ersten Nebenantriebs 35 aus Drehungen der ersten Propellerwelle 31 gewonnen wird, und die dem zweiten Nebenantrieb 45 über den ihm zugeordneten Umrichter 46 zugeführt und zum Antrieb der zweiten Propellerwelle 41 mittels des als Motor betriebenen zweiten Nebenantriebs 45 verwendet wird.

Bei dem zweiten Leistungswert P2 werden die Bordnetzgeneratoren 11 bis 14 daher wieder ausschließlich zur Energieversorgung des Bordnetzes 1 verwendet und beide Propellerwellen 31, 41 werden nur mittels von dem ersten Hauptantrieb 33 erbrachter Hauptantriebsleistung 51 und der aus den Abgasen des ersten Hauptantrieb 33 gewonnenen Abgasleistung 52 bei einem guten Wirkungsgrad des ersten Hauptantrieb 33 angetrieben. Das Antriebssystem 2 wird derart ausgelegt, dass der zweite Leistungswert P2 einer bevorzugten Geschwindigkeit entspricht, mit der das Schiff bei Langsamfahrten gefahren wird. Bei einem typischen Containerschiff betragen beispielsweise der zweite Leistungswert P2 etwa 25 MW, der zweite Drehzahlwert n2 etwa 57 min-1 und die dem zweiten Leistungswert P2 entsprechende Geschwindigkeit des Schiffes etwa 17 Knoten.

So lässt sich das Schiff effektiv und effizient in einem dem zweiten Leistungswert P2 entsprechenden Betriebspunkt betreiben, in dem der erste Hauptantrieb 33 gut ausgelastet und damit der spezifische Kraftstoffverbrauch niedrig ist, der zweite Hauptantrieb 43 nicht in Betrieb ist, eine ausreichende Geschwindigkeit realisiert werden kann und die aus den Abgasen des ersten Hauptantriebs 33 gewonnene Abgasleistung 52 voll zum Antrieb des Schiffes genutzt wird. Das Antriebssystem 2 wird vorzugsweise mittels eines intelligenten Power-Management-Systems (PMS) gesteuert.

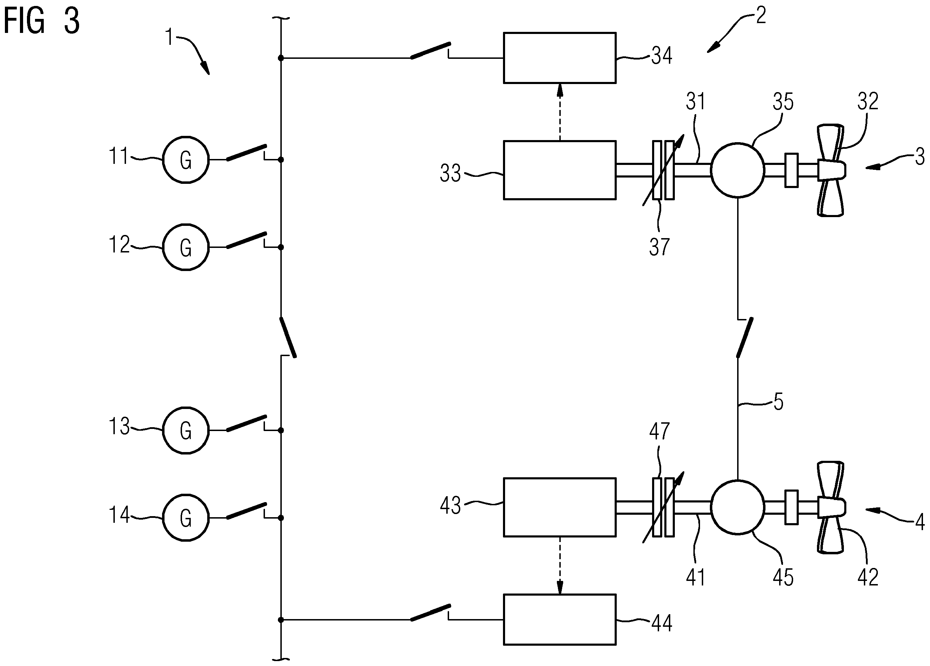

Figur 3 zeigt ein Blockdiagramm eines an ein Bordnetz 1 gekoppelten Antriebssystems 2 eines Schiffes gemäß einem zweiten Ausführungsbeispiel. Dieses Ausführungsbeispiel unterscheidet sich von dem in Figur 1 dargestellten ersten Ausführungsbeispiel dadurch, dass die beiden Nebenantriebe 35, 45 nicht über Umrichter 36, 46 mit dem Bordnetz 1 verbindbar sind, sondern direkt miteinander über eine elektrische Welle 5 koppelbar sind. Zum Antrieb beider Propellerwellen 31, 41 mit nur von einem ersten Hauptantrieb 33 erbrachter Leistung wird die erste Propellerwelle 31 direkt von dem ersten Hauptantrieb 33 angetrieben und die zweite Propellerwelle 41 wird mittels elektrischer Energie angetrieben, die mittels des ersten generatorisch betriebenen Nebenantriebs 35 aus Drehungen der ersten Propellerwelle 31 gewonnen und mittels der elektrischen Welle 5 dem zweiten Nebenantrieb 45 zugeführt wird.

Die in den Figuren 1 und 3 dargestellten Ausführungsbeispiele können auch miteinander kombiniert werden, indem die Nebenantriebe 35, 45 sowohl über Umrichter 36, 46 mit dem Bordnetz 1 verbindbar als auch direkt miteinander über eine elektrische Welle 5 koppelbar sind.

Obwohl die Erfindung im Detail durch bevorzugte Ausführungsbeispiele näher illustriert und beschrieben wurde, so ist die Erfindung nicht durch die offenbarten Beispiele eingeschränkt, sondern durch die folgenden Ansprüche.

## Patentansprüche

1. Verfahren zum Betrieb eines Antriebssystems (2) eines Schiffes mit zwei Antriebssträngen (3, 4), wobei jeder Antriebsstrang (3, 4)
- eine Propellerwelle (31, 41),
- einen als Verbrennungskraftmaschine ausgebildeten Hauptantrieb (33, 43) zum Antrieb der Propellerwelle (31, 41),
- einen als rotierende elektrische Maschine ausgebildeten Nebenantrieb (35, 45), der wahlweise als Antrieb der Propellerwelle (31, 41) oder generatorisch durch die Propellerwelle (31, 41) angetrieben betreibbar ist,
- und einen dem Nebenantrieb (35, 45) zugeordneten Umrichter (36, 46) aufweist, mittels dessen eine Frequenz einer dem Nebenantrieb (35, 45) zugeführten und von dem Nebenantrieb (35, 45) erzeugten Wechselspannung veränderbar ist, umfasst, und
- jeder Nebenantrieb (35, 45) über die Umrichter (36, 46) als ein den anderen Nebenantrieb (35, 45) antreibender Generator betreibbar ist,
- und die Nebenantriebe (35, 45) derart ausgelegt und verschaltet sind, dass beide Propellerwellen (31, 41) nur mittels von genau einem Hauptantrieb (33, 43) geleisteter Arbeit antreibbar sind,
- indem ein erster Nebenantrieb (35, 45) generatorisch zur Erzeugung elektrischer Energie aus Drehungen einer von dem Hauptantrieb (33, 43) direkt angetriebenen ersten Propellerwelle (31, 41) betrieben wird
- und der zweite Nebenantrieb (35, 45) als von dem ersten Nebenantrieb (35, 45) angetriebener Antrieb der zweiten Propellerwelle (31, 41) betrieben wird,
wobei
- eine Antriebsleistung (50) zum Antrieb beider Propellerwellen (31, 41) in einem ersten Leistungsintervall nur von genau einem Hauptantrieb (33, 43) erbracht wird, wobei
- eine erste Propellerwelle (31, 41) direkt von dem Hauptantrieb (33, 43) angetrieben wird
- und die zweite Propellerwelle (31, 41) mittels elektrischer Energie angetrieben wird, die mittels eines ersten generatorisch betriebenen Nebenantriebs (35, 45) aus Drehungen der ersten Propellerwelle (31, 41) gewonnen und zum Antrieb der zweiten Propellerwelle (31, 41) mittels des zweiten Nebenantriebs (35, 45) verwendet wird,
und wobei
- eine Antriebsleistung (50) zum Antrieb beider Propellerwellen (31, 41) in einem zweiten Leistungsintervall nur von genau einem Hauptantrieb (33, 43) und dem Bordnetz (1) entnommener Leistung erbracht wird, wobei
- eine erste Propellerwelle (31, 41) direkt von dem Hauptantrieb (33, 43) angetrieben wird
- und die zweite Propellerwelle (31, 41) mittels elektrischer Energie angetrieben wird, die zu einem Teil dem Bordnetz (1) entnommen und zu einem zweiten Teil mittels eines ersten als Generator betriebenen Nebenantriebs (35, 45) aus Drehungen der ersten Propellerwelle (31, 41) gewonnen wird, und die dem zweiten Nebenantrieb (35, 45) über den ihm zugeordneten Umrichter (36, 46) zugeführt und zum Antrieb der zweiten Propellerwelle (31, 41) mittels des als Motor betriebenen zweiten Nebenantriebs (35, 45) verwendet wird.

2. Verfahren nach Anspruch 1,
**dadurch gekennzeichnet, dass** das Antriebssystem (2) mit wenigstens einer Energiegewinnungsvorrichtung (34, 44) zur Gewinnung von elektrischer Energie aus Abgasen eines Hauptantriebs (33, 43) versehen wird.

3. Verfahren nach Anspruch 2,
**dadurch gekennzeichnet, dass** von der wenigstens einen Energiegewinnungsvorrichtung (34, 44) aus Abgasen gewonnene Energie in ein Bordnetz (1) des Schiffes einspeisbar ist.

4. Verfahren nach Anspruch 2 oder 3,
**dadurch gekennzeichnet, dass** von der wenigstens einen Energiegewinnungsvorrichtung (34, 44) aus Abgasen gewonnene Energie wenigstens einem Umrichter (36, 46) zum Antrieb des dem Umrichter (36, 46) zugeordneten Nebenantriebs (35, 45) zuführbar ist.

5. Verfahren nach einem der vorhergehenden Ansprüche,
**dadurch gekennzeichnet, dass** jedem Nebenantrieb (35, 45) über den ihm zugeordneten Umrichter (36, 46) elektrische Energie aus einem Bordnetz (1) des Schiffes zuführbar ist.

6. Verfahren nach einem der Ansprüche 2 bis 5,
**dadurch gekennzeichnet, dass** wenigstens ein Hauptantrieb (33, 43) auf eine Auslegungsleistung für den Antrieb beider Propellerwellen (31, 41) ausgelegt wird, so dass die Auslegungsleistung allein von dem Hauptantrieb (33, 43) und aus seinen Abgasen gewonnener elektrischer Energie bei einem wenigstens annähernd minimalen spezifischen Kraftstoffverbrauch des Hauptantriebs (33, 43) erbracht wird.

7. Verfahren nach einem der vorhergehenden Ansprüche,
**dadurch gekennzeichnet, dass** die beiden Hauptantriebe (33, 43) für unterschiedliche Maximalleistungen ausgelegt werden.

8. Verfahren nach einem der vorhergehenden Ansprüche,
**dadurch gekennzeichnet, dass** die beiden Nebenantriebe (35, 45) durch eine elektrische Welle (5) gekoppelt werden.

9. Verfahren nach einem der vorhergehenden Ansprüche,
**dadurch gekennzeichnet, dass** das erste Leistungsintervall derart definiert wird, dass es eine Antriebsleistung (50) enthält, bei der derjenige Hauptantrieb (33, 43), der die Antriebsleistung (50) erbringt, einen minimalen spezifischen Kraftstoffverbrauch hat.

10. Verfahren nach Anspruch 4,
**dadurch gekennzeichnet, dass** eine Antriebsleistung (50) zum Antrieb beider Propellerwellen (31, 41), die mit einer Auslegungsleistung eines Hauptantriebs (33, 43) gemäß Anspruch 6 übereinstimmt, nur von genau einem auf diese Auslegungsleistung ausgelegten Hauptantrieb (33, 43) und aus den Abgasen dieses Hauptantriebs (33, 43) gewonnener elektrischer Energie erbracht wird, wobei
- eine erste Propellerwelle (31, 41) direkt von dem Hauptantrieb (33, 43) angetrieben wird
- und die zweite Propellerwelle (31, 41) mittels elektrischer Energie angetrieben wird, die zu einem Teil aus den Abgasen des Hauptantriebs (33, 43) und zu einem zweiten Teil mittels eines ersten als Generator betriebenen Nebenantriebs (35, 45) aus Drehungen der ersten Propellerwelle (31, 41) gewonnen wird, und die dem zweiten Nebenantrieb (35, 45) über den ihm zugeordneten Umrichter (36, 46) zugeführt und zum Antrieb der zweiten Propellerwelle (31, 41) mittels des als Motor betriebenen zweiten Nebenantriebs (35, 45) verwendet wird.

## Claims

1. Method for operating a drive system (2) of a ship with two drive trains (3, 4), wherein each drive train (3, 4) comprises
- a propeller shaft (31, 41),
- a main drive (33, 43) embodied as an internal combustion engine for driving the propeller shaft (31, 41),
- an auxiliary drive (35, 45) embodied as a rotary electrical machine, which can optionally be operated as a drive of the propeller shaft (31, 41) or driven by the propeller shaft (31, 41) as a generator,
- and has a converter (36, 46) assigned to the auxiliary drive (35, 45), by means of which a frequency of an AC voltage supplied to the auxiliary drive (35, 45) and generated by the auxiliary drive (35, 45) can be changed, and
- each auxiliary drive (35, 45) can be operated via the converter (36, 46) as a generator driving the other auxiliary drive (35, 45),
- and the auxiliary drives (35, 45) are constructed and interconnected such that both propeller shafts (31, 41) can only be driven by means of work performed by precisely one main drive (33, 43),
- by a first auxiliary drive (35, 45) being operated as a generator for generating electrical energy from rotations of a first propeller shaft (31, 41) directly driven by the main drive (33, 43)
- and the second auxiliary drive (35, 45) being operated as a drive of the second propeller shaft (31, 41) driven by the first auxiliary drive (35, 45),
wherein
- a drive capacity (50) for driving the two propeller shafts (31, 41) in a first capacity range is only yielded by precisely one main drive (33, 43), wherein
- a first propeller shaft (31, 41) is directly driven by the main drive (33, 43)
- and the second propeller shaft (31, 41) is driven by means of electrical energy, which is recovered from rotations of the first propeller shaft (31, 41) by means of a first auxiliary drive (35, 45) operated as a generator and is used for driving the second propeller shaft (31, 41) by means of the second auxiliary drive (35, 45),
and wherein
- a drive capacity (50) for driving the two propeller shafts (31, 41) in a second capacity range is only yielded by precisely one main drive (33, 43) and capacity extracted from the on-board power supply (1), wherein
- a first propeller shaft (31, 41) is directly driven by the main drive (33, 43)
- and the second propeller shaft (31, 41) is driven by means of electrical energy, part of which is extracted from the on-board power supply (1) and a second part of which is recovered from rotations of the first propeller shaft (31, 41) by means of a first auxiliary drive (35, 45) operated as a generator, and which is supplied to the second auxiliary drive (35, 45) via the converter (36, 46) assigned to it and is used to drive the second propeller shaft (31, 41) by means of the second auxiliary drive (35, 45) operated as a motor.

2. Method according to claim 1,
**characterised in that** the drive system (2) is provided with at least one energy recovery apparatus (34, 44) for recovering electrical energy from exhaust gases of a main drive (33, 43).

3. Method according to claim 2,
**characterised in that** energy recovered from exhaust gases by the at least one energy recovery apparatus (34, 44) can be fed into an on-board power supply (1) of the ship.

4. Method according to claim 2 or 3,
**characterised in that** energy recovered from exhaust gases by the at least one energy recovery apparatus (34, 44) can be supplied to at least one converter (36, 46) to drive the auxiliary drive (35, 45) assigned to the converter (36, 46).

5. Method according to one of the preceding claims,
**characterised in that** each auxiliary drive (35, 45) can be supplied with electrical energy from an on-board power supply (1) of the ship via the converter (36, 46) assigned to it.

6. Method according to one of claims 2 to 5,
**characterised in that** at least one main drive (33, 43) is designed for driving the two propeller shafts (31, 41) at a design capacity, so that the design capacity is yielded by main drive (33, 43) alone and electrical energy recovered from its exhaust gases with an at least approximately minimal specific fuel consumption of the main drive (33, 43).

7. Method according to one of the preceding claims,
**characterised in that** the two main drives (33, 43) are designed for different maximum capacities.

8. Method according to one of the preceding claims,
**characterised in that** the two auxiliary drives (35, 45) are coupled by an electrical shaft (5).

9. Method according to one of the preceding claims,
**characterised in that** the first capacity range is defined such that it contains a drive capacity (50) at which the main drive (33, 43) which yields the drive capacity (50) has a minimal specific fuel consumption.

10. Method according to claim 4,
**characterised in that** a drive capacity (50) for driving the two propeller shafts (31, 41), which corresponds with a design capacity of a main drive (33, 43) according to claim 6, is only yielded by precisely one main drive (33, 43) designed for this design capacity and from electrical energy recovered from the exhaust gases of said main drive (33, 43), wherein
- a first propeller shaft (31, 41) is directly driven by the main drive (33, 43)
- and the second propeller shaft (31, 41) is driven by means of electrical energy, part of which is recovered from the exhaust gases of the main drive (33, 43) and a second part of which is recovered from rotations of the first propeller shaft (31, 41) by means of a first auxiliary drive (35, 45) operated as a generator, and which is supplied to the second auxiliary drive (35, 45) via the converter (36, 46) assigned to it and is used to drive the second propeller shaft (31, 41) by means of the second auxiliary drive (35, 45) operated as a motor.

## Revendications

1. Procédé pour faire fonctionner un système (2) de propulsion d'un bateau ayant deux chaînes (3, 4) de propulsion, chaque chaîne (3, 4) de propulsion comprenant
- un arbre (31, 41) d'hélice,
- un entraînement (33, 43) principal constitué sous la forme d'un moteur à combustion interne pour entraîner l'arbre (31, 41) de l'hélice,
- un entraînement (35, 45) secondaire constitué sous la forme d'une machine électrique rotative, qui peut fonctionner au choix comme entraînement de l'arbre (31, 41) de l'hélice ou être entraînée en génératrice par l'arbre (31, 41) de l'hélice,
- et un convertisseur (36, 46), qui est associé à l'entraînement (35, 45) secondaire et au moyen duquel une fréquence d'une tension alternative appliquée à l'entrainement (35, 45) secondaire et produite par l'entraînement (35, 45) secondaire peut être modifiée et
- chaque entraînement (35, 45) secondaire peut, par le convertisseur (36, 46), fonctionner en génératrice entraînant l'autre entraînement (35, 45) secondaire,
- et les entraînements (35, 45) secondaires sont conçus et connectés de manière à ce que les deux arbres (31, 41) d'hélice ne puissent entraîner qu'au moyen d'un travail fourni par exactement un entraînement (33, 43) principal,
- par le fait que l'on fait fonctionner un premier entraînement (35, 45) en génératrice pour produire de l'énergie électrique à partir de rotations d'un premier arbre (31, 41) d'hélice entraîné directement par l'entraînement (33, 43) principal,
- et que l'on fait fonctionner le deuxième entraînement (35, 45) secondaire comme entraînement, entraîné par le premier entraînement (35, 45) secondaire, du deuxième arbre (31, 41) d'hélice,
dans lequel
- on apporte une puissance (50) d'entraînement pour l'entraînement des deux arbres (31, 41) d'hélice dans un premier intervalle de puissance seulement par exactement un entraînement (33, 43) principal, dans lequel
- on entraîne un premier arbre (31, 41) d'hélice directement par l'entraînement (33, 43) principal,
- et on entraîne le deuxième arbre (31, 41) d'hélice au moyen d'énergie électrique, qui est obtenue à partir de rotations du premier arbre (31, 41) d'hélice, au moyen d'un premier entraînement (35, 45) secondaire fonctionnant en génératrice et qui est utilisé pour l'entraînement du deuxième arbre (31, 41) d'hélice au moyen du deuxième entraînement (35, 45) secondaire,
et dans lequel
- on apporte une puissance (50) d'entraînement pour entraîner les deux arbres (31, 41) d'hélice dans un deuxième intervalle de puissance seulement par exactement un entraînement (33, 43) principal et de la puissance prélevée du réseau (1) de bord, dans lequel
- on entraîne un premier arbre (31, 41) d'hélice directement par l'entraînement (33, 43) principal,
- et on entraîne le deuxième arbre (31, 41) d'hélice au moyen d'énergie électrique, qui est prélevée, pour une partie, du réseau (1) de bord et, pour une deuxième partie, au moyen d'un premier entraînement (35, 45) secondaire fonctionnant en génératrice à partir de rotations du premier arbre (31, 41) d'hélice et qui est envoyée au deuxième entraînement (35, 45) secondaire par le convertisseur (36, 46), qui lui est associé et qui est utilisée pour entraîner le deuxième arbre (31, 41) de propulseur au moyen du deuxième entraînement (35, 45) secondaire fonctionnant en moteur.

2. Procédé suivant la revendication 1,
**caractérisé en ce que** le système (2) de propulsion est pourvu d'au moins un système (34, 44) d'obtention d'énergie pour obtenir de l'énergie électrique à partir de gaz d'échappement d'un entraînement (33, 43) principal.

3. Procédé suivant la revendication 2,
**caractérisé en ce que** de l'énergie obtenue à partir de gaz d'échappement par le au moins un système (34, 44) d'obtention d'énergie peut être injectée dans le réseau (1) de bord du bateau.

4. Procédé suivant la revendication 2 ou 3,
**caractérisé en ce que** de l'énergie obtenue à partir de gaz d'échappement par le au moins un système (34, 44) d'obtention d'énergie peut être envoyée au moins à un convertisseur (36, 46) pour entraîner l'entraînement (35, 45) secondaire associé au convertisseur (36, 46).

5. Procédé suivant l'une des revendications précédentes,
**caractérisé en ce que** de l'énergie électrique peut être envoyée d'un réseau (1) de bord du bateau à chaque entraînement (35, 45) secondaire par le convertisseur (36, 46) qui lui est associé.

6. Procédé suivant l'une des revendications 2 à 5,
**caractérisé en ce qu'**au moins un entraînement (33, 43) principal est conçu sur une puissance nominale pour l'entraînement des deux arbres (31, 41) d'hélice, de manière à ce que la puissance nominale soit, pour une consommation spécifique de carburant au moins à peu près minimum de l'entraînement (33, 43) principal, apportée seulement par l'entraînement (33, 43) principal et à partir d'énergie électrique obtenue de ses gaz d'échappement.

7. Procédé suivant l'une des revendications précédentes,
**caractérisé en ce que** les deux entraînements (33, 43) principaux sont conçus pour des puissances maximum différentes.

8. Procédé suivant l'une des revendications précédentes,
**caractérisé en ce que** les deux entraînements (35, 45) secondaires sont accouplés par un arbre (5) électrique.

9. Procédé suivant l'une des revendications précédentes,
**caractérisé en ce que** l'on définit le premier intervalle de puissance de manière à ce qu'il contienne une puissance (50) d'entraînement, à laquelle l'entraînement (33, 43) principal, qui apporte la puissance (50) d'entraînement, a une consommation de carburant spécifique minimum.

10. Procédé suivant la revendication 4,
**caractérisé en ce qu'**une puissance (50) d'entraînement pour l'entraînement des deux arbres (31, 41) d'hélice, qui coïncide avec une puissance nominale d'un entraînement (33, 43) principal suivant la revendication 6, n'est apportée que par exactement un entraînement (33, 43) principal conçu sur cette puissance nominale et à partir d'énergie électrique obtenue à partir des gaz d'échappement de cet entraînement (33, 43) principal, dans lequel
- on entraîne un premier arbre (31, 41) d'hélice directement par l'entraînement (33, 43) principal,
- et on entraîne le deuxième arbre (31, 41) d'hélice au moyen d'énergie électrique, qui est obtenue, pour une partie, à partir des gaz d'échappement de l'entraînement (33, 43) principal et, pour une deuxième partie, au moyen d'un premier entraînement (35, 45) secondaire fonctionnant en génératrice à partir de rotations du premier arbre (31, 41) d'hélice et qui est envoyée au deuxième entraînement (35, 45) secondaire par le convertisseur (36, 46) qui lui est associé et qui est utilisée pour entraîner le deuxième arbre (31, 41) d'hélice au moyen du deuxième entraînement (35, 45) secondaire fonctionnant en moteur.
